# EUROPEAN PATENT APPLICATION

(11) **EP 2 434 406 A2**
(43) Date of publication of application: **28.03.2012**
(21) Application number: 11181714.4
(22) Date of filing: 16.09.2011
(51) Int. Cl.: G06F 12/02

(54) **Distributed memory array supporting random access and file storage operations**

(30) Priority: 24.09.2010 US 889469
(71) Applicant: Honeywell International, Inc., Morristown, New Jersey 07962-2245 (US)
(72) Inventor: Kimmery, Clifford E., Morristown, NJ 07962-2245 (US)
(74) Representative: Buckley, Guy Julian

(57) **Abstract**

A distributed memory array that supports both file storage and random access operations is provided. The distributed memory array includes at least one memory assembly for storing data, each memory assembly having a plurality of memory modules coupled together through a bi-directionally cross-strapped network, each memory module having a switching mechanism. The distributed memory array further includes at least one gateway coupled to the at least one memory assembly through the bi-directionally cross-strapped network. The gateway also includes a plurality of user access ports for providing access to the at least one memory assembly, and a file manager that is configured to receive a request from a user for access to the at least one memory assembly at the user access ports for either file storage or random access operations and to allocate at least one allocation unit of available memory in the at least one memory assembly based on the request from the user. The file manager is further configured to translate further requests from the user to memory mapped transactions for accessing the at least one allocation unit.

## Description

### BACKGROUND

Existing spacecraft payload processing systems utilize mass memory for primarily two functions, specifically, random access processing applications and file storage operations. Memory systems used by random access processing applications typically have different performance and capacity characteristics than those used in file storage operations. Accordingly, processing applications are typically configured with low latency and high throughput memory in integrated, dedicated processing units while file storage operations, which demand high capacity and high throughput, generally use independent dedicated memory units.

This fixed configuration of the dedicated memory in present spacecraft payload processing systems makes it costly to process multiple applications simultaneously due to increased capacity requirements. Excess dedicated memory resources are required for increased capacity for today's ever escalating data transfer rates and more complex data handling requirements. The increase in dedicated memory adds to the overall size, weight, and power utilization required by current spacecraft payload processing systems.

### SUMMARY

A distributed memory array that supports both file storage and random access operations is provided. The distributed memory array includes at least one memory assembly for storing data, each memory assembly having a plurality of memory modules coupled together through a bi-directionally cross-strapped network, each memory module having a switching mechanism. The distributed memory array further includes at least one gateway coupled to the at least one memory assembly through the bi-directionally cross-strapped network. The gateway also includes a plurality of user access ports for providing access to the at least one memory assembly, and a file manager that is configured to receive a request from a user for access to the at least one memory assembly at the user access ports for either file storage or random access operations and to allocate at least one allocation unit of available memory in the at least one memory assembly based on the request from the user. The file manager is further configured to translate further requests from the user to memory mapped transactions for accessing the at least one allocation unit.

### BRIEF DESCRIPTION OF THE DRAWINGS

These and other features, aspects, and advantages are better understood with regard to the following description, appended claims, and accompanying drawings where:

Figure 1A is a schematic diagram of one embodiment of a satellite system including a distributed memory array according to the teachings of the present invention;

Figure 1B is a schematic diagram of a payload processing unit having one embodiment of a distributed memory array and a computer according to the teachings of the present invention;

Figure 2 is a schematic diagram of another embodiment of a distributed memory array according to the teachings of the present invention;

Figure 3 is a schematic diagram of one embodiment of a distributed memory array according to the teachings of the present invention;

Figure 4 is a schematic diagram of an embodiment of a memory manager in a memory module according to the teachings of the present invention;

Figure 5 is a schematic diagram of an embodiment of a gateway according to the teachings of the present invention;

Figure 6 is a flow diagram of an embodiment of a method for operating a distributed memory array according to the teachings of the present invention.

In accordance with common practice, the various described features are not drawn to scale but are drawn to emphasize features relevant to the present invention. Like reference characters denote like elements or components throughout figures and text.

### DETAILED DESCRIPTION

Some embodiments disclosed herein relate to a distributed memory array for a satellite system. At least one embodiment is described below with reference to one or more example applications for illustration. It is understood that numerous specific details, relationships, and methods are set forth to provide a fuller understanding of the embodiments disclosed. Similarly, the operation of well-known components and processes has not been shown or described in detail below to avoid unnecessarily obscuring the details of the embodiments disclosed. In particular, a distributed memory array for mass memory storage is provided for increased fault tolerance, which supports throughput and random access, as well as, capacity and throughput scalability.

As shown in the drawings for purposes of illustration, embodiments of the present invention provide a fault-tolerant distributed memory array providing reliable, high-speed storage of data. The distributed memory array employs a distributed, modular structure in which an array of at least one memory assembly and a set of application specific gateways are bi-directionally cross-strapped for mass storage applications. The at least one memory assembly comprises a distributed, bi-directionally cross-strapped array of at least one memory module. The distributed, bi-directionally cross-strapped architecture decreases latency and allows failed components to be bypassed, thus providing fault tolerance for memory, control, and switching. A memory system management function manages memory allocation in this distributed structure by reassigning non-dedicated memory to provide enhanced fault-tolerance. The distributed memory array allows for the low latency and high throughput needed for processing operations while maintaining high capacity and throughput needed for mass storage applications.

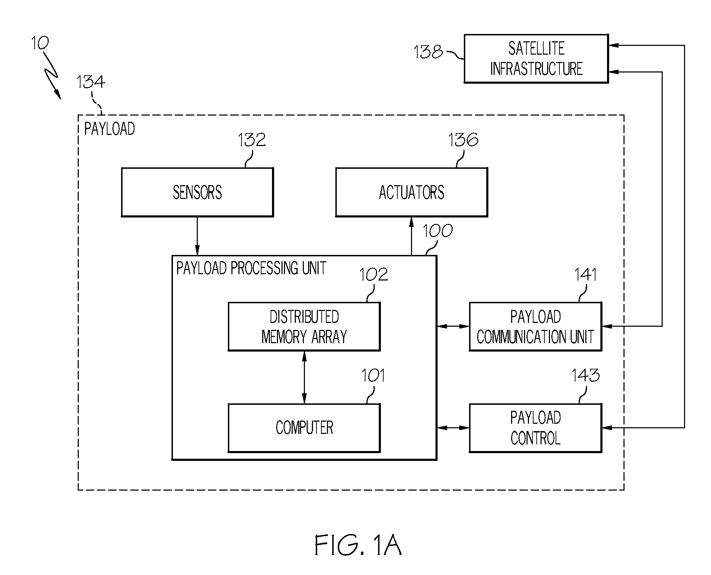

Figure 1A is a schematic diagram of one embodiment of a satellite system 10 that includes one embodiment of a payload 134. The payload 134 is coupled to a satellite infrastructure 138. The satellite infrastructure 138 includes components for maintaining the satellite system 10 in orbit, including but not limited to, a power source, positioning information, and a command and control center.

The payload 134 includes subsystems used to implement a particular application, e.g., communications, weather monitoring, television broadcast or other appropriate application. Payload 134 includes a payload processing unit 100 that performs payload related functions. Payload processing unit 100 is coupled to sensors 132, and actuators 136. Depending on the complexity of the payload, there may be processors dedicated to managing the various sensors and actuators as well as processors dedicated to computational aspects of the payload application.

The payload processing unit 100 includes a distributed memory array 102 coupled to a computer 101. Distributed memory array 102 is coupled to user components such as, for example, the computer 101, payload communications unit 141 and payload control 143 through user access ports. In other embodiments, distributed memory array 102 comprises a standalone unit that provides storage capacity for other payloads of satellite system 100. Also, it is understood that in alternative embodiments, the payload 134 can include more than one payload processing unit 100 or more than one computer 101 for various processing needs.

In operation, the sensors 132 sense the payload 134 and send a signal to the payload processing unit 100 which processes the signal. In response, the payload processing unit 100 sends a signal to the actuators 136, which perform the needed function to the payload 134. Payload processing unit 100 may also store data from, for example, sensors 132 in distributed memory array 102 as described in more detail below.

In one embodiment, the distributed memory array 102 includes a plurality of memory modules which are configurable for high capacity file storage or low latency random access processing operation. The computer 101 acts as a data processor for the distributed memory array 102, and processes the data for either file storage or random access operations.

In operation, the payload processing unit 100 receives input data from an input source, such as, for example, sensors 132. The computer 101 processes the data, as necessary, and generates a data storage request to store the processed data in the distributed memory array 102 using either random access or file storage operations. The computer 101 then passes the data storage request to the distributed memory array 102. The distributed memory array 102 selects and configures a destination memory module in the array to handle data storage for the request. In one embodiment, the distributed memory array 102 allocates memory in units, referred to as allocation units, at an appropriate level of granularity for the request from the computer 101. It is understood that the size of allocation units varies based on system needs, however, the granularity of the allocation unit can be as small as the smallest addressable unit of memory.

The distributed memory array 102 translates further requests from computer 101 to store data in the distributed memory array 102 into memory mapped transactions for accessing the allocation unit for the request in the destination memory module. The input data is then passed to the selected memory module through the distributed memory array 102 for storage. For data retrieval using the requested memory access mechanism, either file storage or random access operations, the distributed memory array 102 similarly retrieves data from the memory module of the distributed memory array 102 holding the requested data and provides the data to the computer 101.

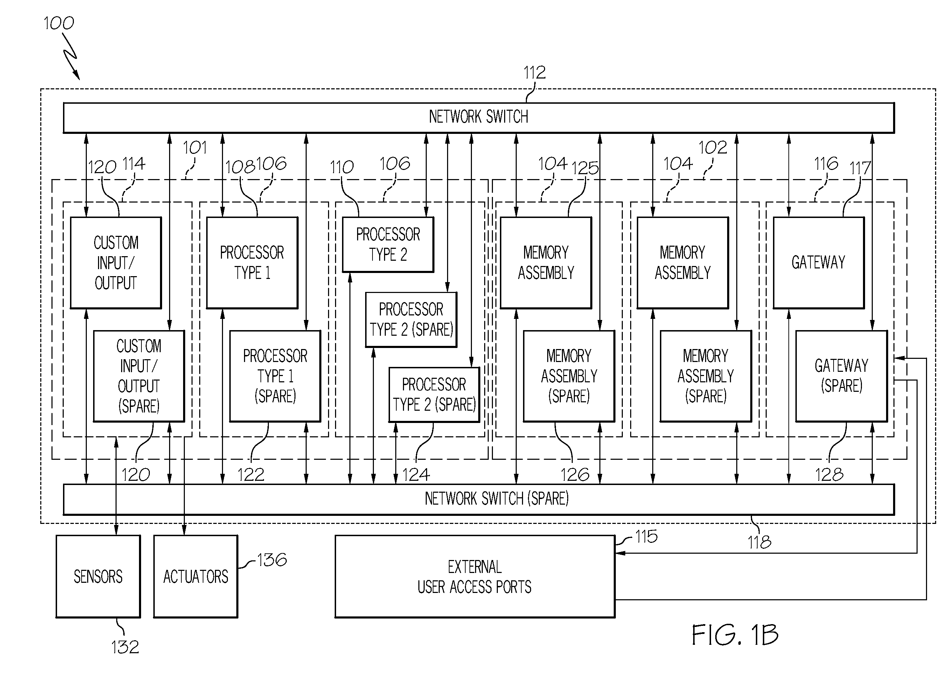

Figure 1B is a schematic diagram of one example of a payload processing unit 100 comprising a computer 101 coupled to a distributed memory array 102 via network switch 112. The distributed memory array 102 comprises a memory assembly layer 104 and a gateway layer 116. The computer 101 comprises a processor layer 106 to provide heterogeneous functionality to the payload processing unit 100. The memory assembly layer 104 comprises a distributed array of at least one memory assembly, such as, for example, memory assembly 125. The distributed memory array 102 receives input data from the computer 101 which includes an input/output layer 114. The input/output layer 114 accepts information from external inputs such as, for example, sensors 132.

The gateway layer 116 provides the distributed memory array 102 with internal function-specific access controllers. Gateway layer 116 is coupled to network switch 112. Gateway layer 112 communicates with memory assembly layer 104 through memory ports coupled to network switch 112. Further, gateway layer 116 communicates with processor layer 106 and custom input/output layer 114 through internal user ports coupled to network switch 112.

In one embodiment, the gateway layer 116 accepts and translates data packets of supported messaging protocols to determine memory destinations and physical memory addresses within the memory assembly layer 104. The gateway layer 116 enables the payload processing unit 100 to efficiently process data from various applications. In particular, the gateway layer 116 is configured to implement memory access mechanisms for file storage and random access processing operations, in a solitary system, as described below in greater detail. Specifically, the gateway layer 116 includes a first set of gateways configured to implement a file storage memory access mechanism when requested by an application and a second set of gateways configured to implement a random access memory access mechanism when requested by other applications. It is understood, however, that any gateway can be later dynamically reconfigured to process at least one of file storage and random access operations.

In one embodiment, the processor layer 106 implements a number of applications for the payload processing unit 100. Each application running on the processor layer 106 stores data more efficiently using either file storage or random access memory access mechanisms. The processor layer 106 comprises a first processor unit 108 and a second processor unit 110. In one embodiment, the first processor unit 108 runs applications that use a file storage memory access mechanism to store data in distributed memory array 102. The second processor unit 110 runs applications that use a random access mechanism for storing data in distributed memory array 102. Alternative embodiments of the computer 101 may not comprise either the first processor unit 108 or the second processor unit 110 depending on the intended application of the payload processing unit 100. For example, a payload processing unit primarily designed for random access processing may function without the first processor unit 108. Conversely, a payload processing unit that is designed primarily to utilize a mass storage system may function without the second processor unit 110.

In the example embodiment, the computer 101 and the distributed memory array 102 can be dynamically reconfigured after initial arrangement within the payload processing unit 100. For example, a memory management system which controls the memory assembly layer 104 can dynamically reassign any allocated allocation unit within the memory assembly layer 104 from file storage to random access processing as needed to support the current requirements of the payload processing unit 100. Furthermore, data within each allocation unit can be discarded or transferred, thus enabling reassignment of allocation units, as discussed in greater detail below. This allows the payload processing unit 100 to transform as system operation and application demands change.

The computer 101 and the distributed memory array 102 further employ a system of spare components to provide redundancy. For example, each component of the payload processing unit 100 is associated with at least one spare component 118, 120, 122, 124, 126, and 128. This redundant connectivity of the payload processing unit 100 supplies the unit with a fault-tolerant property. The fault-tolerant property enables the payload processing unit 100 to continue operating properly in the event of a failure by replacing an unsuccessful component with a properly functioning spare component.

In operation, the payload processing unit 100 stores and retrieves data for payload applications through the use of the computer 101 and the distributed memory array 102 for both file storage and random access operations. For data storage, the distributed memory array 102 receives input data through either the network switch 112, or through external user access ports 115. The distributed memory array 102 may receive data via network switch 112 from processor layer 106, custom input/output layer 114 or any other data source that is coupled to network switch 112, e.g., a processor of another payload of the satellite system.

Distributed memory array 102 receives requests and data at gateway layer 116. The gateway layer 116 manages memory allocation for distributed memory array 102. The gateway layer 116 determines the source of the request and the type of memory access requested, e.g., random access or file storage. Based upon this determination, the controller gateway layer 116 selects and configures the distributed memory array 102 for data storage for the request. As data is received for this request, the input data is converted to a memory mapped transaction by the gateway layer 116 and then passed through the memory assembly layer 104 to the selected position in the selected memory module. Likewise, for data retrieval, the data is passed from the selected memory module in the distributed memory array 102 to the computer 101 for processing functions or to any other requesting entity or application. In one example, the data is passed to either processor 108 or processor 110 within the processor layer 106 depending on the application requesting the data.

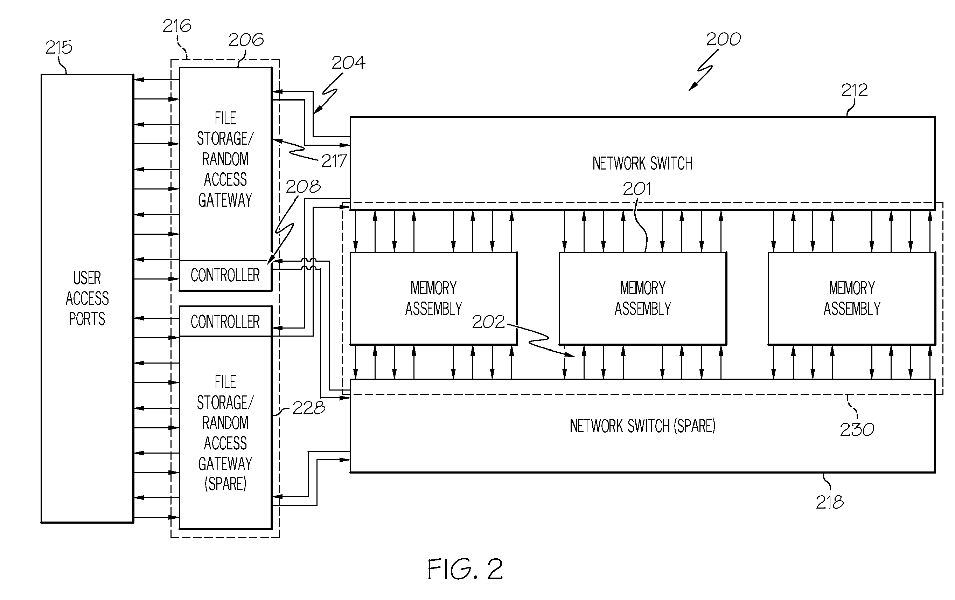

Figure 2 is a schematic diagram of an alternate embodiment of a distributed memory array 200. The schematic diagram illustrates the connectivity between the memory assembly layer 230 and a gateway layer 216 through a network switch 212. The gateway layer 216 comprises at least one gateway, such as, for example, gateway 217. The gateway 217 further comprises a function-specific gateway 206 and a controller 208. The network switch 212 adds a layer of centralized switching through a standard form of network protocol providing non-blocking switching for greater throughput. In the example embodiment of Fig. 2, the network switch 212 utilizes Serial RapidIO, which is a high performance packet-switched interconnect technology for communication in embedded systems. It is understood that in alternate implementations of the memory assembly layer 230, the network switch 212 employs alternate technologies to provide non-blocking switching, such as Peripheral Component Interconnect Express (PCIe) switching and other similar interconnect methods. The network switch 212 acts as a communication branch between the memory assembly layer 230 and the gateway 206.

In the example embodiment, the network switch 212 is connected to the memory assembly layer 230 through a bi-directional architecture 202. The memory assembly layer 230 comprises at least one memory assembly, such as a memory assembly 201. In the example embodiment, the memory assembly 201 includes a plurality of bi-directional connections to the network switch 212. The bi-directional architecture 202 introduces a number of benefits for distributed memory array 200. First, the plurality of bidirectional links 202 provides reduced latency in retrieving data from memory assembly layer 230. Further, the bidirectional links 202 also enable more efficient error-correction between the memory assembly layer 230 and the network switch 212. The network switch 212 is also coupled to the gateway layer 216 through a bi-directional cross strapping connectivity 204. The bi-directional cross strapping connectivity 204 in conjunction with the spare gateway 228 and spare network switch 218 enhances the fault-tolerance characteristic of the system. If either the network switch 212 or the gateway 217 fails, the bi-directional cross strapping connectivity 204 will bypass the unsuccessful component by removing it from the mapping. In systems that constantly provide power to spare components, this switchover may be instantaneous.

In operation, the gateway layer 216 determines whether a storage request requires a memory access mechanism for random access or file storage. Based upon this determination and the source of the request, the gateway layer 216 selects and configures a memory module of the memory assembly layer 230 for data storage. As data is received for the request, the gateway layer translates the requests into memory mapped transactions for the selected memory module. The input data is then sent from the gateway layer 216 to the memory assembly layer 230.

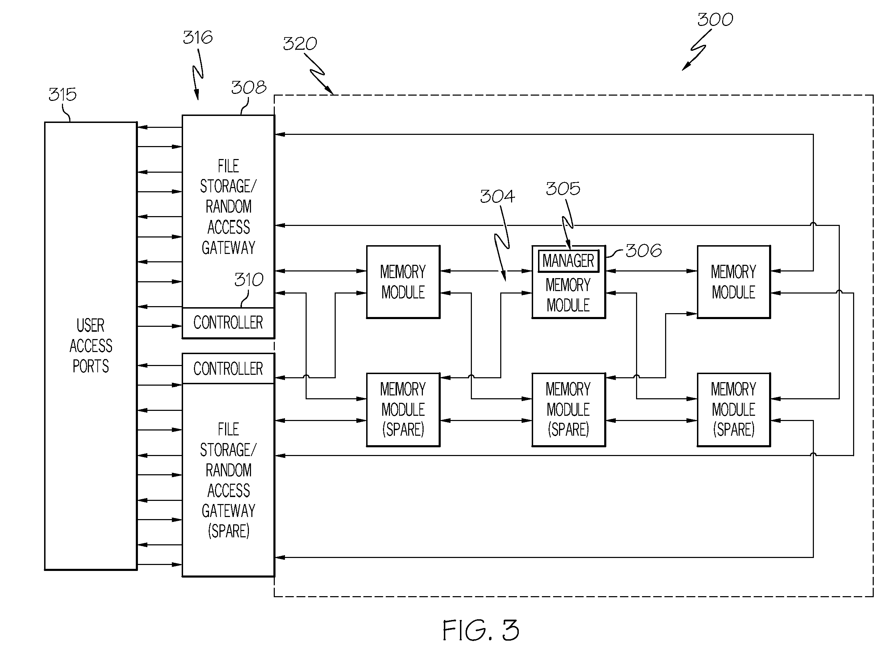

Figure 3 is a schematic diagram of one embodiment of a distributed memory array 300. The distributed memory array 300 includes a memory assembly 320. Memory assembly 320 includes at least one memory module, such as, for example, a memory module 306. It is understood that alternative embodiments of the memory assembly 320 may comprise as many memory modules as is necessary for a particular application of the system. In the example embodiment, the memory module 306, as well as the other memory modules of the memory assembly 320 each act as a memory storage component. Data stored in the memory modules 306 can be retrieved, transferred, and/or stored for later use. Further, the memory modules 306 can be either dedicated or non-dedicated memory depending on the appropriate application. The non-dedicated memory can be reassigned for use with either form of memory access mechanism, e.g., file storage or random access, as operation needs evolve or to further enhance the fault-tolerant nature of the distributed memory array. The use of non-dedicated, re-assignable memory decreases the total power utilization and improves efficiency by decreasing the overall size and weight of the system. Further, it improves system scalability by allowing selectively configuring each allocation unit in each memory module for file storage or random access as needed.

In the example embodiment, the individual memory modules 306 of the memory assembly 320 are connected through a bi-directionally cross-strapped network 304. Each memory module 306 possesses a degree of internal limited switching, called a memory manager 305, configured to implement the bi-directionally cross-strapped network 304. Upon system failure, the controller, e.g., controller 310, utilizes the internal switching functionality to provide direct replacement of the failed memory module by removing the appropriate link in the bi-directionally cross-strapped network 304. In the example embodiment, the memory modules 306 are directly bi-directionally cross-strapped to a gateway/controller layer 316 instead of connected through a centralized level of connectivity, such as the network switch 112, such as in Fig. 1B. Further, the memory assembly 201 of Fig. 2, in one embodiment, is configured as shown in memory assembly 320 of Fig. 3.

In one embodiment, a gateway 308 acts as a translation firewall and handles the decision-making related to memory storage. For example, the gateway 308 determines which memory module in the memory assembly 300 receives a read or write request from user access ports 315. A controller 310, which is coupled to the gateway 308, provides management functionality to the gateway 308 to conduct allocation of memory in the distributed memory array. The gateway layer 316 will be discussed in greater detail in the figures described below.

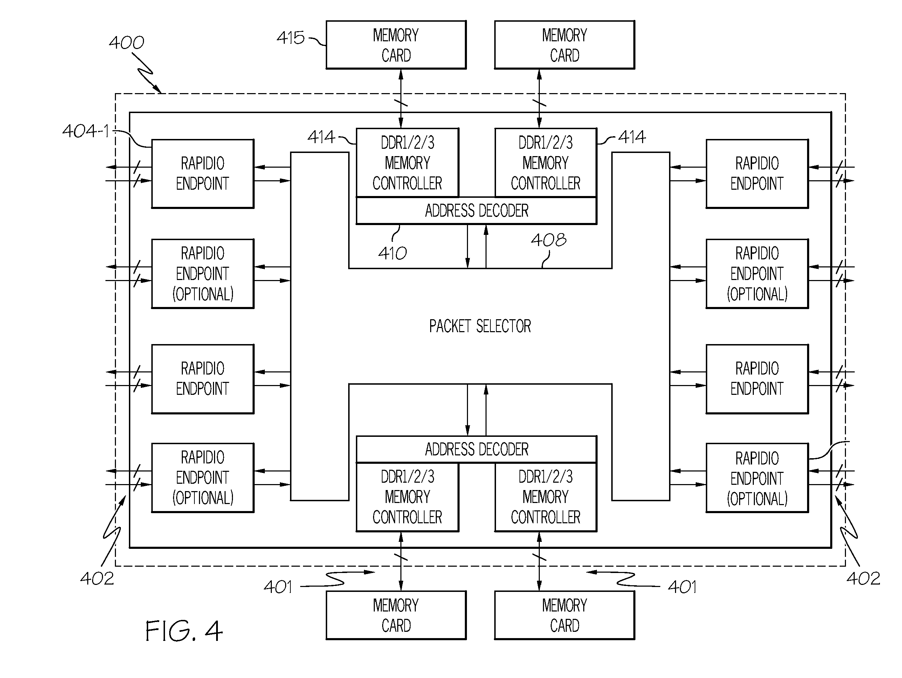

Figure 4 is a schematic diagram of an embodiment of a memory manager 400 that manages access to a plurality of memory cards 415 under the control of one or more associated gateways. One or more memory managers, such as the memory manager 400, are present in each memory module of a memory assembly, such as, for example, the memory assembly 320, to provide a limited switching mechanism. The memory manager 400 is coupled to memory cards 415 over an interface 401, e.g., a dual in-line memory module (DIMM) interface. Memory manager 400 further provides connection to upstream and downstream memory modules via RapidIO endpoints 404-1 to 404-8 and communication links 402. RapidIO endpoints 404-1 to 404-8 support memory mapped communication.

In the example embodiment, a packet selector 408, which is bi-directionally coupled to the RapidIO endpoints 404, examines each packet received at an endpoint 404 and determines whether the memory destination is local to the memory manager 400. Depending on the memory destination and packet selection information of the packet, the packet selector 408 determines whether to accept or pass the packet. If the packet is accepted, the packet selector 408 authenticates the packet. Packet selector 408 determines whether the packet has the right to access the local memory by utilizing source and access control table information within the packet selector 408 to authenticate access privileges. If the packet does have access privileges, the address decoder 410 then decodes the physical memory address of the packet and performs the specified operations to the memory module. If the data is to be stored within the memory module, a memory controller 414 selects a memory card, such as, for example, memory card 415, to store the data. After the data is stored, the packet selector 408 then issues responses to the requester of each packet indicating success or failure. If the packet is passed, the packet selector 408 passes the packet via a RapidIO endpoint 404 and communication link 402 to the next memory manager in the chain of memory modules in the memory assembly.

In Figure 4, several of the RapidIO endpoints 404 are indicated as optional. These optional endpoints 404, when included, provide higher bandwidth communication between the gateway and the memory modules.

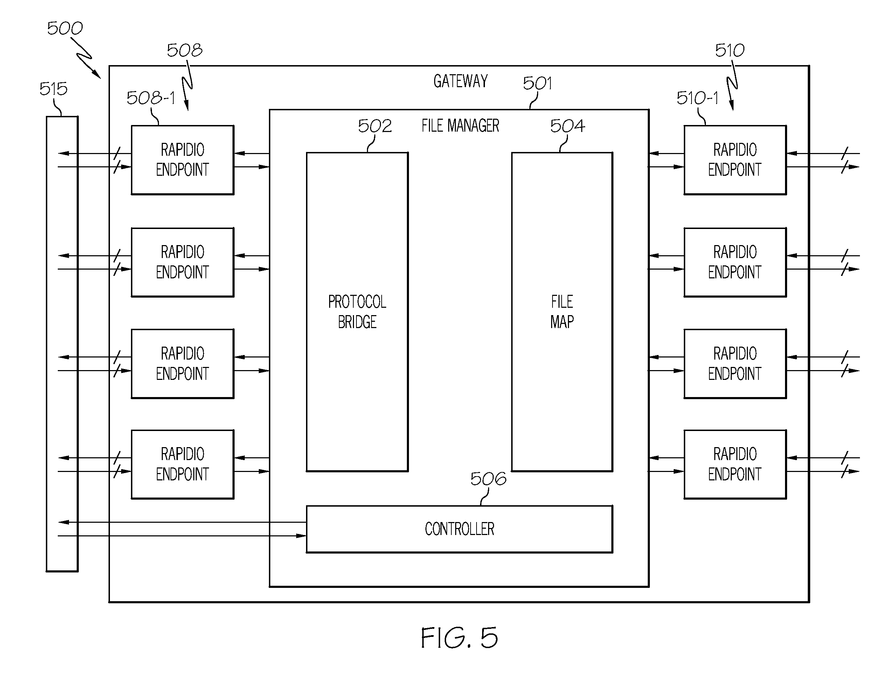

Figure 5 is a schematic diagram of an embodiment of a gateway 500 for use in a distributed memory array such as distributed memory array 102 (Fig. 1A, 1B), 200 Fig. 2, and 300 (Fig. 3). In the example embodiment, the gateway 500 utilizes the Serial RapidIO network protocol to provide access (external) connectivity for users and (internal) connectivity to memory assemblies/modules. It is understood that alternative implementations of the gateway 500 employ alternate technologies to provide connectivity, such as the PCIe protocol and other similar interconnect mechanisms commonly used in defense, aerospace, and telecommunication systems. The architecture of gateway 500 provides a protection mechanism for the system, providing internal decision-making related to memory allocation.

In one embodiment, the gateway 500 includes a file manager 501 and a plurality of RapidIO endpoints 508 and 510. RapidIO endpoints 508 communicate with users via user access ports 515. RapidIO endpoints 510 communicate with memory managers of various memory modules. File manager 501 further includes a protocol bridge 502, a file map 504, and a controller 506 to support types of memory access such as file storage and random access operations in a single distributed memory array. In the example embodiment, the gateway 500 handles requests from applications to store and retrieve data in the distributed memory array. These requests specify the required memory access mechanism, e.g., either file storage operations or random access processing. For example, the gateway 500 accepts packets at RapidIO endpoints 508, such as, for example, RapidIO endpoint 508-1. The gateway 500 communicates with the associated memory modules via RapidIO endpoints 510, e.g., RapidIO endpoint 510-1. It is noted that, in alternative embodiments, the memory manager is included in the gateway.

In operation, the controller 506 manages the overall behavior of the gateway 500 and the associated memory modules by configuring or adjusting variables and controlling global settings for the protocol bridge 502, the file map 504, and select memory managers of various memory modules, if needed, for the system. Furthermore, the controller 506 has access to internal directories and sub-directories for performing abstractions as needed by a file manager 501. In the example embodiment, the controller 506 is a software based processor; however, it is understood that the controller 506 can be implemented as a hardwired state machine.

The protocol bridge 502 and the file map 504 both perform mapping and translation functions for the gateway 500. Specifically, the protocol bridge 502 translates the incoming packets at RapidIO endpoints 508 between various supported messaging protocols. The file map 504 acts as a virtual memory mapping function. In operation, the file map 504 translates logical addresses as understood by users into the corresponding physical addresses needed to specify a storage location with the distributed memory array, e.g., memory mapped messages or transactions.

It is understood that the gateway 500 can be configured to process requests from applications requiring at least one of file storage and random access memory access mechanisms, and then later dynamically reconfigured to process requests specifying a different mechanism based upon system needs.

The gateway 500 performs file storage operations. For example, in one embodiment, the file manager 501 receives RapidIO packets at RapidIO endpoint 508. These packets are passed to the protocol bridge 502, as necessary. Protocol bridge 502 translates the packets to a required protocol, e.g., IO Logical write packets. The protocol bridge 502 further terminates the packets by responding to the user, through user access ports 515, indicating successful reception of the packets. The protocol bridge 502 then becomes responsible for successfully writing the packet content to the appropriate memory locations using the memory mapped protocol. The memory location to be used for a messaging packet is determined from configuration information and the file map 504. The file manager 501 also tracks messaging protocol packets to maintain and update information inside the file map 504, for more efficient storage and retrieval functions for the overall file storage operation.

In an alternative embodiment, the gateway 500 performs random access processing applications. For example, the file manager 501 receives RapidIO packets of IO Logical protocol at RapidIO endpoints 508 through the protocol bridge 502 and translates a virtual destination address of the packet into an equivalent memory destination and physical memory address. The gateway 500 further performs network address translation, unique to each packet source, to authenticate the packet to the destination memory manager.

In the example embodiment, the file manager 501 accepts RapidIO message packets at RapidIO endpoints 508 for purposes of file storing applications whereas the file manager 501 accepts only RapidIO packets of IO Logical protocol for random access processing operations. RapidIO packets of IO Logical protocol support only memory mapping, such as accessing and addressing memory, without any higher level application support. For purposes of space conservation and efficiency, the example embodiment does not utilize alternative RapidIO protocols for random access processing operations; however, it is understood that alternative embodiments may utilize alternative RapidIO protocols for one or both of the necessary gateway applications.

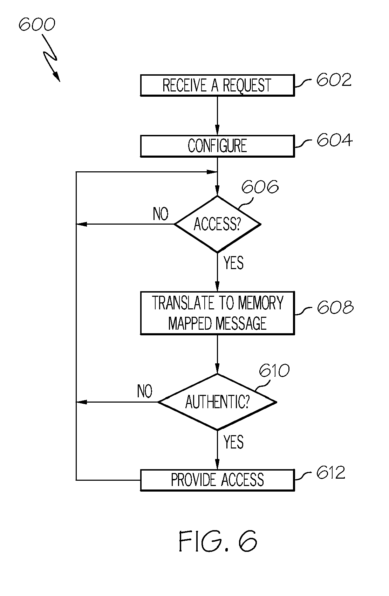

Figure 6 is a flow diagram of one embodiment of a method 600 for operating a distributed memory array that supports file storage and random access operations, e.g., distributed memory array 102, 200, or 300 described above. In the example embodiment, the distributed memory array receives a request for access from a user (Block 602), e.g., from computer 101, processing layer 106, or other user. It is understood that the user can be any custom user input or a sensor, such as, for example, the sensors 132, or various other data generation or processing devices. Once the distributed memory array receives the access request from the user (Block 602), the distributed memory array allocates at least one allocation unit of memory for the user and configures the necessary components of the distributed memory array to handle subsequent access requests from the user associated with the original access request including selecting a destination memory module (Block 604). This memory allocation operation is conducted by a gateway of the distributed memory array, such as, for example, gateway 117, 217 or 308.

At this point, the distributed memory array is ready to receive additional access requests from the user (Block 606). When an access request is received from the user, the gateway translates the request to a memory mapped transaction including an address in physical memory associated with the request (Block 608). The request is then passed to the selected memory module through the distributed memory array and a memory manager located on each memory module determines whether the request should be accepted or passed to a next memory module. Once the request is passed to the selected memory module, the request is authenticated (Block 610). If the request passes the authentication, the request is acted upon, as authorized, and data is stored or retrieved at the determined destination in the selected memory module (Block 612).

This description has been presented for purposes of illustration, and is not intended to be exhaustive or limited to the embodiments disclosed. Variations and modifications may occur, which fall within the scope of the following claims. For example, some of the examples above utilize Serial RapidIO as the network protocol; however, it is understood that alternate implementations may be implemented using alternate technologies to provide non-blocking switching, such as PCIe switching and other similar interconnect mechanisms. Furthermore, some of the network components described above may be implemented using either software executing on a suitable processing circuitry and machine-readable storage mediums or through hardwired logic.

## Claims

1. A distributed memory array that supports both file storage and random access operations, the distributed memory array comprising:
at least one memory assembly for storing data, each memory assembly having a plurality of memory modules coupled together through a bi-directionally cross-strapped network, each memory module having a switching mechanism; and
at least one gateway coupled to the at least one memory assembly through the bi-directionally cross-strapped network, the gateway including:
a plurality of user access ports for providing access to the at least one memory assembly; and
a file manager that is configured to receive a request from a user for access to the at least one memory assembly at the user access ports for either file storage or random access operations and to allocate at least one allocation unit of available memory in the at least one memory assembly based on the request from the user, the file manager further configured to translate further requests from the user to memory mapped transactions for accessing the at least one allocation unit.

2. The distributed memory array of claim 1, wherein the file manager includes:
a controller in communication with the plurality of user ports;
a file map, configured by the controller based on the requests from users, that translates logical addresses in user requests into physical addresses to provide access to the at least one allocation unit in the at least one memory assembly; and
a protocol bridge configured to convert messages between supported protocols for the file manager.

3. The distributed memory array of claim 1, wherein the gateway includes:
communication endpoints coupled to the plurality of user ports and the file manager; and
communication endpoints coupled to the plurality of memory modules and the file manager.

4. The distributed memory array of claim 1, wherein each of the at least one memory modules includes:
a plurality of memory cards; and
a memory manager, configured by the controller, to provide authentication and to store and retrieve data in the memory cards based on user requests.

5. The distributed memory array of claim 1, wherein the bi-directionally cross-strapped network bypasses failed components to provide fault tolerance for both the at least one gateway and the plurality of memory modules.

6. The distributed memory array of claim 1, wherein data stored in the plurality of memory modules is re-assignable to another memory module.

7. The distributed memory array of claim 1, wherein the at least one memory assembly is bi-directionally coupled to a centralized layer of network switching;
wherein the centralized layer of network switching is coupled to the gateway layer through the bi-directionally cross-strapped network, the centralized layer of network switching providing non-blocking switching.

8. The distributed memory array of claim 7, wherein the bi-directionally cross-strapped network bypasses failed network switches to provide fault tolerance for switching functions.

9. The distributed memory array of claim 4, wherein each memory manager comprises:
a packet selector configured to accept a packet of data or pass a packet of data to the next memory manager in the bi-directionally cross-strapped network;
an address decoder operable to decode a physical memory address of the packet of data; and
a memory controller configurable to manage internal data storage and retrieval operations within a memory module.

10. A method for a distributed memory array, the method comprising:
receiving a request for data storage in the distributed memory array, wherein the request specifies either a memory access mechanism configured for random access or for file storage operation;
configuring the distributed memory array to handle subsequent accesses associated with the request; and
when subsequent access is requested,
translating the subsequent access request to a memory mapped transaction to access at least one allocation unit of a destination memory module;
passing the request through the distributed memory array to the destination memory module;
authenticating the request at the destination memory module; and
providing access to the at least one allocation unit of the destination memory module.
